# EUROPÄISCHE PATENTSCHRIFT

(11) **EP 2 260 001 B1**
(45) Veröffentlichungstag und Bekanntmachung des Hinweises auf die Patenterteilung: **23.11.2011**
(21) Anmeldenummer: 09728299.0
(22) Anmeldetag: 26.03.2009
(51) Int. Cl.: C01C 1/02, B01J 41/04

(54) **VERFAHREN ZUR ENTFERNUNG VON HALOGEN AUS FLÜSSIGEM AMMONIAK**
METHOD FOR REMOVING HALOGEN FROM LIQUID AMMONIA
PROCÉDÉ D'EXTRACTION D'HALOGÈNE CONTENU DANS DE L'AMMONIAQUE LIQUIDE

(30) Priorität: 04.04.2008 EP 08154079
(43) Veröffentlichungstag der Anmeldung: 15.12.2010
(73) Patentinhaber: BASF SE, 67056 Ludwigshafen (DE)
(72) Erfinder: Bou Chedid, Roland, 68159 Mannheim (DE); Iffland, Gabriele, 69126 Heidelberg (DE); Ciprian, Jürgen, 67071 Ludwigshafen (DE); Melder, Johann-Peter, 67459 Böhl-Iggelheim (DE); Pape, Frank-Friedrich, 67259 Kleinniedesheim (DE)
(86) Internationale Anmeldenummer: PCT/EP2009/053568
(87) Internationale Veröffentlichungsnummer: WO 2009/121782

(56) Entgegenhaltungen:
- US-B1- 6 969 466
- Sybron Chemicals Inc.: "IONAC ASB-1" XP002585827 Gefunden im Internet: URL:http://www.bakercorp.com/pdfs/ASB-1.pd f [gefunden am 2010-06-04]

## Beschreibung

Die vorliegende Erfindung betrifft ein Verfahren zur Abreicherung von Halogenidionen aus flüssigem Ammoniak. Weiterhin betrifft die vorliegende Erfindung die Verwendung eines erfindungsgemäß erhältlichen Ammoniaks als Edukt bei der Herstellung von Aminen.

Allgemeine Verfahren zur Herstellung von Ammoniak sind beispielsweise im Kirk-Othmer (Kirk-Othmer Encyclopedia of Chemical Technology, Electronic Edition, Last updated Feb. 1, 2008, John Wiley and Sons, Inc., Chapter "Ammonia") und Ullmann's Encyclopedia of Industrial Chemistry beschrieben (Ullmann's Encyclopedia of Industrial Chemistry, Electronic Edition, Last updated February 1 st, 2008, Wiley & Sons, Inc., Chapter "Ammonia"). Ammoniak wird in der Regel aus Synthesegas und Stickstoff hergestellt. Das im Synthesegas vorhandene Kohlenmonoxid (CO) wird üblicherweise vor der eigentlichen Synthese in einer Kohlenmonoxid-Shift-Reaktion in Kohlendioxid (CO₂) umgewandelt, welches größtenteils leicht vom Wasserstoffgas abgetrennt werden kann. Die Entfernung von Rest-CO₂ erfolgt im Allgemeinen durch Gaswäsche mit einem Lösungsmittel, das eine hohe CO₂-Löslichkeit aufweist. Im Anschluss erfolgt in der Regel noch eine Methanisierung, in der CO zu Methan umgesetzt wird.

Nach der Umsetzung von Wasserstoff und Stickstoff zu Ammoniak enthält der Produkt-Gasstrom u.a. Spuren von Methan und Inertgasen, wie Argon oder Helium. Diese Verbindungen werden in der Regel durch Entgasung (purging) entfernt. Anschließend wird Ammoniak im Allgemeinen aus dem Gasstrom auskondensiert oder durch eine Gaswäsche mit Wasser als Lösungsmittel als wässrige Ammoniaklösung isoliert. Durch Auskondensation erhaltenes flüssiges Ammoniak ist in der Regel in einer Reinheit von 99,9 Gew.-% (Rest Wasser und Inertgase) im Handel erhältlich.

Üblicherweise erfolgt eine weitere Aufreinigung von flüssigem Ammoniak dadurch, das Ammoniak in den gasförmigen Zustand gebracht wird und entweder destillativ von anderen Verunreinigungen getrennt wird, oder die Verunreinigungen durch in Kontakt bringen des gasförmigen Ammoniaks mit Absorbentien entfernt oder durch in Kontakt bringen mit einem Katalysator katalytisch zersetzt werden.

JP-A-2002037623 und US-A-20040091413 offenbaren beispielsweise Verfahren zur Entfernung von Sauerstoff, Kohlenmonoxid und Wasser aus kommerziell erhältlichem Ammoniak durch in Kontakt bringen von gasförmigem Ammoniak mit manganoxidhaltigen Katalysatoren und anschließender Überleitung des gasförmigen Ammoniaks über Zeolithe. Die Entfernung von Halogenidionen wird nicht offenbart.

In KR-A-20020078608 wird Ammoniakgas über einen thermisch behandelten Zeolithen geleitet um Spuren von Wasser und Öl zu entfernen, das bei der nachfolgenden Umsetzung von Ammoniak zu NF₃ zu unerwünschten Nebenprodukten führt. Die Entfernung von Halogenidionen ist ebenfalls nicht erwähnt.

Die im Stand der Technik beschriebenen Verfahren zur Aufreinigung von Ammoniak haben den Nachteil, dass Ammoniak in den gasförmigen Zustand gebracht und anschließend wieder kondensiert werden muss. Dieser Vorgang ist energetisch ungünstig und die technische Umsetzung erfordert im Allgemeinen hohe Investitionsmittel. Aufgabe der vorliegenden Erfindung war es deshalb ein Verfahren zur Verfügung zu stellen, mit dem Halogenidionen aus flüssigem Ammoniak entfernt werden können, ohne dass das Ammoniak in den gasförmigen Zustand gebracht werden muss. Eine solche Aufreinigungsmethode ist insbesondere dann vorteilhaft, wenn bei der Lagerung oder dem Transport von flüssigem Ammoniak Verunreinigungen in den Ammoniak gelangt sind und welche vor dem Einsatz des Ammoniaks als Edukt in einer Synthese entfernt werden müssen.

GB-A-862,180 offenbart die Entfernung von ionischen Verunreinigungen, beispielsweise Chlorid, aus nicht-wässrigen Lösungsmitteln, unter anderen auch Ammoniak. Diese Offenbarung lehrt den Einsatz von unlöslichen, offenkettigen ("open-chain"), hochmolekularen Polymeren, die Ionenaustauschergruppen enthalten. Durch die offenkettige Architektur der Polymere sollen offenbarungsgemäß die am Polymer gebundenen Ionenaustauschergruppen besser erreichbar sein, da in konventionellen Ionenaustauschern, bei denen die Ionenaustauschergruppen in einer vernetzten Matrix eingebettet sind, die Ionenaustauschergruppen in nicht wässrigen Lösungsmitteln nur schwer zugänglich sind. Als ein geeignetes offenkettiges Polymer mit Ionenaustauschergruppen wird Dimethylaminoethyl-Cellulose offenbart. Als besonders geeignetes offenkettiges Polymere wird modifizierte alpha-Cellulose genannt.

GB-A-862,180 lehrt, dass die ionischen Verunreinigungen von dem lonenaustauscherharz durch Spülung mit einem wässrigen oder nicht-wässrigen Eluenten abgespült werden können. In GB-A-862,181 wird allerdings festgestellt, dass zur Ablösung von bestimmten ionischen Verbindungen, wie quaternäre Ammoniumgruppen, von offenkettigen Polymeren mit kationischen Ionenaustauschergruppen spezielle Eluenten verwendet werden müssen.

Der vorliegenden Erfindung lag auch die Aufgabe zu Grunde, ein einfaches technisches Verfahren zu entwickeln, mit denen Halogenidionen aus flüssigem Ammoniak entfernt werden können. Dass Material, das zur Abreicherung der Halogenidionen verwendet wird, sollte eine hohe Kapazität zur Aufnahme an ionischen Verunreinigungen aufweisen und somit hohe Standzeiten ermöglichen. Zudem sollte die Aktivität des Materials durch eine einfache Regeneration bzw. Aufarbeitung wiederhergestellt werden können, so dass keine umständlichen Regenerierungsschritte bzw. Aufbereitungsschritte erforderlich sind. Vielmehr war es Ziel ein Verfahren bereit zu stellen, welches geringe Investitionskosten erfordert und technisch einfach zu realisieren ist.

Erfindungsgemäß wurde die Aufgabe durch ein Verfahren zur Abreicherung von Halogenidionen aus flüssigem Ammoniak, dadurch gekennzeichnet, dass man den flüssigen Ammoniak mit einem stark basischen Ionenaustauscher in Kontakt bringt, wobei das Grundgerüst des stark basischen Ionenaustauschers eine kovalent vernetzte Polymermatrix ist, gelöst.

Als flüssiger Ammoniak kann flüssiger Ammoniak in das Verfahren eingesetzt werden, der Halogenidionen, wie Cl⁻. Br⁻, F⁻, I⁻, vorzugsweise Cl⁻ und/oder Br⁻, insbesondere Cl-, enthält.

Die Konzentration an Halogenidionen im flüssigen Ammoniak beträgt in der Regel zwischen 1 und 10000 ppm, bevorzugt zwischen 2 und 1000 ppm, besonders bevorzugt zwischen 5 bis 500 ppm, insbesondere bevorzugt zwischen 10 bis 200 ppm.

Als flüssiges Ammoniak kann herkömmlich im Handel erhältliches flüssiges Ammoniak eingesetzt werden, beispielsweise Ammoniak mit einem Gehalt von mehr 98 Gew.-% Ammoniak, bevorzugt mehr als 99 Gew.-% Ammoniak, bevorzugt mehr als 99,5 Gew.-%, insbesondere mehr als 99,8 Gew.-% Ammoniak.

Erfindungsgemäß werden stark basische Ionenaustauscher eingesetzt.

Stark basische Anionaustauscher sind aus einem festen Grundgerüst (Matrix) aufgebaut, das mit funktionelle Gruppen (Ionenaustauschergruppen) verankert ist. Erfindungsgemäß ist das feste Grundgerüst eine kovalent vernetzte Polymermatrix. Eine solche kovalent vernetzte Polymermatrix kann durch Kondensation oder Polymerisation von bifunktionellen Monomeren mit Vernetzer-Molekülen erhalten werden.

So ist beispielsweise eine kovalent vernetzte Polymermatrix durch Kondensation von m-Phenylendiamin mit Formaldehyd als Vernetzer-Molekül erhältlich.

Vorzugsweise wird eine kovalent vernetzte Polymermatrix durch Polymerisation von polymerisierbaren Monomeren mit polymerisierbaren Vernetzer-Molekülen erhalten. Als polymerisierbare Monomere werden bevorzugt Styrol und/oder Acrylsäureester bzw. Methacrylsäurester, besonders bevorzugt Styrol, eingesetzt.

Als polymerisierbare Vernetzer-Moleküle kommen beispielsweise Divinylbenzol, DiEster von Acrylsäure, wie Ethylenglykolacrylat, Diethylenglykolacrylat, Butandiolacrylat, oder Vinylester von Acrylsäure, in Betracht. Vorzugsweise wird Divinylbenzol als polymerisierbares Vernetzer-Molekül eingesetzt.

In einer besonderen Ausführungsform werden stark basische Ionenaustauscher eingesetzt, deren Polymermatrix aus vernetztem Polystyrol oder Polyacrylat aufgebaut ist.

Das Grundgerüst von stark basischen Ionenaustauschern ist mit funktionellen Gruppen verankert, die einen stark basischen Charakter aufweisen. Bevorzugte funktionelle Gruppen sind quaternäre Ammoniumgruppen. Beispiele für quaternäre Ammoniumgruppen sind Benzyltrimethylammonium- oder Benzyldimethylethanolammoniumgruppen.

Stark basische Ionenaustauscher mit quaternären Ammoniumgruppen sind in der Regel durch Polymerisation von Styrol und Divinylbenzol und anschließender Chloromethylierung und nachfolgender Umsetzung der chloromethylierten Umestzungsprodukte mit tertiären Aminen, wie Trimethylamin, Triethylamin oder Dimethylaminoethanol, erhältlich.

Stark basische Ionenaustauscher werden vorzugsweise durch Suspensionspolymerisation hergestellt. Bei der Suspensionspolymerisation werden üblicherweise die Monomere in Form von Tröpfchen in wässriger Phase dispergiert und im Allgemeinen mit Hilfe eines in den Monomeren gelösten Radikalbildners durch Temperaturerhöhung oder Strahlen ausgehärtet.

Aufgrund ihrer Herstellung weisen stark basische Ionenaustauscher üblicherweise eine Partikelgröße im Bereich von 0,01 mm bis 100 mm, bevorzugt 0,1 mm bis 10 mm, besonders bevorzugt 0,2 bis 5 mm, auf.

Beispiele für im Handel erhältliche stark basische Ionenaustauscher sind Ambersep© 900 OH, Amberjet© 4200 Cl, Amberjet© 4400 Cl, Amberjet© 4600 Cl, Ambersep© 900 SO₄, Amberlite© IRA 402 Cl, Amberlite© IRA 404 Cl, Amberlite© IRA 410 Cl, Amberlite© IRA 458 Cl, Amberlite© IRA 458 RF, Amberlite© IRA 478 RF, Amberlite© IRA 900 Cl, Amberlite© IRA 900 RF, Amberlite© IRA 910 Cl, Amberlite© IRA 958 Cl oder Imac© HP555. Bevorzugte stark basische Ionenaustauscher sind Ambersep© 900 OH, Amberjet© 4400 Cl (in OH-Form) und Amberlite© IRA 900 Cl (in OH-Form).

Das in Kontaktbringen des flüssigen Ammoniaks mit dem basischen Ionenaustauscher erfolgt unter Druck und Temperaturbedingungen, bei denen der Ammoniak in flüssiger Form vorliegt. Vorzugsweise wird ein Temperaturbereich von -20 bis 60°C, vorzugsweise -10 bis 40°C und besonders bevorzugt 0 bis 30°C gewählt.

Der Druck liegt üblicherweise im Bereich von 1 und 25 bar, bevorzugt im Bereich von 1 bis 20 bar und besonders bevorzugt im Bereich von 5 bis 15 bar.

Das in Kontakt bringen von flüssigem Ammoniak mit dem basischen Ionenaustauscher kann auf verschiedene Arten erfolgen.

Eine bevorzugte Ausführungsform zur Abreicherung der Halogenidionen besteht darin, dass die Ionenaustauscher in Betten gepackt werden und flüssiger Ammoniak über die als Fest-, Wander-, Fließ-, oder Schwebebett gepackten Ionenaustauscher geleitet wird.

Bevorzugt sind die Ionenaustauscher als Festbett gepackt.

Die verschiedenen Möglichkeiten zur Ausgestaltung dieses Verfahrens können unter anderem aus Konrad Dorfner, "Ion Exchangers", Walter de Guyter-Verlag, Berlin, 1991, oder Ullmann's Encyclopedia of Industrial Chemistry, Electronic Edition, last update 23rd January, 2008, John Wiley & Sons, Inc., Chapter "Ion Exchangers", Seiten 41 bis 52, entnommen werden.

Die Fließgeschwindigkeit des flüssigen Ammoniaks über die als Bett gepackten Ionenaustauscher liegt in der Regel im Bereich von 5 bis 200 (m³ Ammoniak)/(m³ lonenaustauscher)/Stunde, vorzugsweise 10 bis 120 (m³ Ammoniak)/(m³ lonenaustauscher)/Stunde und besonders bevorzugt 30 bis 100 (m³ Ammoniak)/(m³ lonenaustauscher)/Stunde.

Eine weitere Ausführungsform des erfindungsgemäßen Verfahrens besteht darin die Ionenaustauscher mit dem flüssigen Ammoniak unter Rühren in Kontakt zu bringen und nach einer Rührzeit von wenigen Minuten bis einigen Stunden von dem flüssigen Ammoniak abzutrennen.

Die Rührzeit liegt in der Regel im Bereich von 1 Minute bis zu 48 Stunden, bevorzugt 5 Minuten bis 24 Stunden und besonders bevorzugt 1 Stunde bis 36 Stunden.

Die Konzentration des Ionenaustauschers im flüssigem Ammoniak ist in der Regel im Bereich von 10 bis 60 Gew.-%, bevorzugt im Bereich von 20 bis 40 Gew.-% und besonders bevorzugt im Bereich von 25 bis 30 Gew.-%.

Die Abtrennung der Ionenaustauscher vom flüssigen Ammoniak erfolgt in der Regel durch Filtration oder Zentrifugation.

Bei Ionenaustauschern ist in der Regel mit zunehmender Einsatzdauer ein Verlust der Aktivität (Deaktivierung) festzustellen, der sich üblicherweise dadurch bemerkbar macht, dass die Konzentration von Halogenidionen im flüssigen Ammoniak nach dem in Kontakt bringen mit dem deaktivierten oder teildeaktivierten Ionenaustauscher nicht mehr so niedrig ist, wie bei flüssigem Ammoniak, welcher mit frischem bzw. nichtaktivierten Ionenaustauscher in Kontakt gebracht wurde.

Die Aktivität der Ionenaustauscher kann üblicherweise durch Regenerierung wiederhergestellt werden.

Stark basische Ionenaustauscher werden üblicherweise durch Behandlung mit wässriger Lauge, bevorzugt wässrige Alkalilauge, insbesondere NaOH oder KOH, regeneriert.

Das durch das erfindungsgemäße Verfahren erhältliche Ammoniak erhält in der Regel weniger als 500 ppm Halogenidionen, vorzugsweise weniger als 100 ppm Halogenidionen, besonders bevorzugt weniger als 10 ppm Halogenidionen. Das erfindungsgemäß erhältliche Ammoniak kann als Edukt in die organische Synthese eingesetzt werden. Bevorzugt wird das erfindungsgemäß erhaltene Ammoniak in einem großtechnischem Verfahren zur Herstellung von Aminen verwendet. Besonders bevorzugt wird das erfindungsgemäße erhaltene Ammoniak zur Herstellung von Ethylenamin eingesetzt.

Durch die Abreicherung der Halogenidionen werden üblicherweise unerwünschte Nebenprodukte durch Nebenreaktion und Folgereaktion bei der nachfolgenden Umsetzung des flüssigen Ammoniaks reduziert. Ebenso kann durch die Abreicherung von Halogenidionen die Korrosion an Anlagenteilen verringert werden.

Die Erfindung soll an den nachstehenden Beispielen näher erläutert werden.

### Versuche

### Beispiel 1:

Im ersten Autoklav wurden 15 mg Ammoniumchlorid (Pulver) vorgelegt. Anschließend wurde der Autoklav verschlossen und 100 g Ammoniak bei einem Druck von ca. 10 bar aufgepresst. Danach wurde eine Stunde bei Raumtemperatur gerührt und eine Probe (ca. 10 g) entnommen. Die Konzentration der Chlorid Ionen im Ammoniak wurde mittels Ionenchromatographie (IC) bestimmt.

Die Konzentration an Chlorid-Ionen im flüssigen Ammoniak betrug 100 ppm.

Anschließend wurde der restliche flüssige Ammoniak (ca. 90 g) aus dem ersten Autoklaven in einen zweiten Autoklaven überführt, in dem ca. 3 g Ionenaustauscher vom Typ Ambersep© 900 Cl (in OH-Form) in einem Katalysatorkorb eingebaut war. Nach 24 Stunden Rühren bei Raumtemperatur und bei einem Druck von 10 bar wurde eine weitere Probe (ca. 10 g) entnommen. Der Chlorid-Gehalt wurde mittels lonenchromatographie bestimmt. Der so bestimmte Gehalt an Chlorid-Ionen betrug 5 ppm. Der Chlorid-Gehalt konnte durch in Kontakt bringen mit dem erfindugsgemäßen stark basischen Ionenaustauscher um 95% verringert werden.

### Beispiel 2:

Im ersten Autoklav wurden 15 mg Ammoniumchlorid (Pulver) vorgelegt. Anschließend wurde der Autoklav verschlossen und 100 g Ammoniak bei einem Druck von ca. 10 bar aufgepresst. Danach wurde eine Stunde bei Raumtemperatur gerührt und eine Probe (ca. 10g) genommen. Die Konzentration der Chlorid Ionen im Ammoniak wurde mittels Ionenchromatographie bestimmt.

Die Konzentration an Chlorid-Ionen betrug 93 ppm.

Anschließend wurde der restliche flüssige Ammoniak (ca. 90 g) aus dem ersten Autoklaven in einen zweiten Autoklaven überführt, in dem ca. 5 g Ionenaustauscher vom Typ Ambersep© 4400 Cl (in OH-Form) in einem Katalysatorkorb eingebaut war. Nach jeweils 3 Stunden und 24 Stunden Rühren bei Raumtemperatur und bei einem Druck von 10 bar wurde jeweils eine weitere Probe (jeweils ca. 10 g) entnommen. Der Chlorid-Gehalt wurde mittels Ionenchromatographie bestimmt. Der so bestimmte Gehalt an Chlorid-Ionen betrug nach 3 Stunden 18 ppm und nach 24 Stunden 2 ppm. Der Chlorid-Gehalt konnte durch in Kontakt bringen mit dem erfindungsgemäß stark basischen Ionenaustauscher nach 3 Stunden um 82% und nach 24 Stunden um 98% verringert werden.

## Patentansprüche

1. Verfahren zur Abreicherung von Halogenidionen aus flüssigem Ammoniak, **dadurch gekennzeichnet, dass** man den flüssigen Ammoniak mit einem stark basischen Ionenaustauscher in Kontakt bringt, wobei das Grundgerüst des stark basischen Ionenaustauschers eine kovalent vernetzte Polymermatrix ist und der Gehalt an Ammoniak im flüssigen Ammoniak mehr als 98 Gew.-% beträgt.

2. Verfahren nach Anspruch 1, **dadurch gekennzeichnet, dass** die Polymermatrix des stark basischen Ionenaustauschers aus vernetztem Polystyrol oder Polyacrylat aufgebaut ist.

3. Verfahren nach mindestens einem der Ansprüche 1 bis 2, **dadurch gekennzeichnet, dass** der stark basische Ionenaustauscher quaternäre Ammoniumgruppen als funktionelle Gruppen enthält.

4. Verfahren nach mindestens einem der Ansprüche 1 bis 3, **dadurch gekennzeichnet, dass** man den flüssigen Ammoniak durch Überleitung des flüssigen Ammoniaks über den Ionenaustauscher in Kontakt bringt, wobei der Ionenaustauscher in Betten gepackt angeordnet ist.

5. Verfahren nach Anspruch 4, **dadurch gekennzeichnet, dass** der Ionenaustauscher als Festbett angeordnet ist.

6. Verfahren nach mindestens einem der Ansprüche 4 bis 5, **dadurch gekennzeichnet, dass** die Fließgeschwindigkeit des flüssigen Ammoniaks 10 bis 120 (m³ Ammoniak)/(m³ Ionenaustauscher)/Stunde beträgt.

7. Verfahren nach mindestens einem der Ansprüche 1 bis 3, **dadurch gekennzeichnet, dass** man den flüssigen Ammoniak durch Rühren mit dem Ionenaustauscher in Kontakt bringt.

8. Verfahren nach Anspruch 7, **dadurch gekennzeichnet, dass** der der Ionenaustauscher zusammen mit dem flüssigen Ammoniak zwischen 1 Stunde und 36 Stunden gerührt wird.

9. Verfahren nach mindestens einem der Ansprüche 1 bis 8, **dadurch gekennzeichnet, dass** das in Kontakt bringen von flüssigem Ammoniak und Ionenaustauscher bei einer Temperatur im Bereich von -10 bis 40°C erfolgt.

10. Verfahren nach mindestens einem der Ansprüche 1 bis 9, **dadurch gekennzeichnet, dass** das in Kontakt bringen von flüssigem Ammoniak und Ionenaustauscher bei einem Druck im Bereich von 1 bis 20 bar erfolgt.

11. Verfahren nach mindestens einem der Ansprüche 1 bis 10, **dadurch gekennzeichnet, dass** der Ionenaustauscher regeneriert wird.

12. Verfahren nach mindestens einem der Ansprüche 1 bis 11, **dadurch gekennzeichnet, dass** der Gehalt an Halogenidionen im eingesetzten flüssigen Ammoniak im Bereich von 10 ppm bis 200 ppm liegt.

13. Verfahren nach mindestens einem der Ansprüche 1 bis 12, **dadurch gekennzeichnet, dass** das Halogenidion Chlorid ist.

14. Verfahren zur Herstellung von Aminen, **dadurch gekennzeichnet, dass** man in einer ersten Stufe flüssigen Ammoniak nach einem der Ansprüche 1 bis 13 aufreinigt und in einer zweiten Stufe den in der ersten Stufe erhaltenen Ammoniak in ein Verfahren zur Herstellung von Aminen einsetzt.

## Claims

1. A method for depleting halide ions from liquid ammonia, which comprises bringing the liquid ammonia into contact with a strongly basic ion exchanger, where the basic structure of the strongly basic ion exchanger is a covalently crosslinked polymer matrix and the content of ammonia in the liquid ammonia is more than 98% by weight.

2. The method according to claim 1, wherein the polymer matrix of the strongly basic ion exchanger is composed of crosslinked polystyrene or polyacrylate.

3. The method according to at least one of claims 1 to 2, wherein the strongly basic ion exchanger comprises quaternary ammonium groups as functional groups.

4. The method according to at least one of claims 1 to 3, wherein the liquid ammonia is brought into contact by passing the liquid ammonia over the ion exchanger, where the ion exchanger is arranged packed in beds.

5. The method according to claim 4, wherein the ion exchanger is arranged as a fixed bed.

6. The method according to at least one of claims 4 to 5, wherein the flow rate of the liquid ammonia is 10 to 120 (m³ of ammonia)/(m³ of ion exchanger)/hour.

7. The method according to at least one of claims 1 to 3, wherein the liquid ammonia is brought into contact with the ion exchanger by stirring.

8. The method according to claim 7, wherein the ion exchanger is stirred together with the liquid ammonia for between 1 hour and 36 hours.

9. The method according to at least one of claims 1 to 8, wherein the liquid ammonia and ion exchanger are brought into contact at a temperature in the range from -10 to 40°C.

10. The method according to at least one of claims 1 to 9, wherein liquid ammonia and ion exchanger are brought into contact at a pressure in the range from 1 to 20 bar.

11. The method according to at least one of claims 1 to 10, wherein the ion exchanger is regenerated.

12. The method according to at least one of claims 1 to 11, wherein the content of halide ions in the liquid ammonia used is in the range from 10 ppm to 200 ppm.

13. The method according to at least one of claims 1 to 12, wherein the halide ion is chloride.

14. A process for the production of amines, which comprises, in a first stage, purifying liquid ammonia according to one of claims 1 to 13 and, in a second stage, using the ammonia obtained in the first stage in a process for the production of amines.

## Revendications

1. Procédé d'appauvrissement d'ions halogénures à partir d'ammoniac liquide, **caractérisé en ce que** l'ammoniac liquide est mis en contact avec un échangeur d'ions fortement basique, le squelette de base de l'échangeur d'ions fortement basique étant une matrice polymère réticulée de manière covalente et la teneur en ammoniac de l'ammoniac liquide étant supérieure à 98 % en poids.

2. Procédé selon la revendication 1, **caractérisé en ce que** la matrice polymère de l'échangeur d'ions fortement basique est constituée de polystyrène ou polyacrylate réticulé.

3. Procédé selon au moins l'une quelconque des revendications 1 à 2, **caractérisé en ce que** l'échangeur d'ions fortement basique contient des groupes ammonium quaternaire en tant que groupes fonctionnels.

4. Procédé selon au moins l'une quelconque des revendications 1 à 3, **caractérisé en ce que** l'ammoniac liquide est mis en contact par passage de l'ammoniac liquide sur l'échangeur d'ions, l'échangeur d'ions étant agencé dans des lits.

5. Procédé selon la revendication 4, **caractérisé en ce que** l'échangeur d'ions est agencé sous la forme d'un lit fixe.

6. Procédé selon au moins l'une quelconque des revendications 4 à 5, **caractérisé en ce que** la vitesse d'écoulement de l'ammoniac liquide est de 10 à 120 (m³ d'ammoniac)/(m³ d'échangeur d'ions)/heure.

7. Procédé selon au moins l'une quelconque des revendications 1 à 3, **caractérisé en ce que** l'ammoniac liquide est mis en contact par agitation avec l'échangeur d'ions.

8. Procédé selon la revendication 7, **caractérisé en ce que** l'échangeur d'ions est agité avec l'ammoniac liquide entre 1 heure et 36 heures.

9. Procédé selon au moins l'une quelconque des revendications 1 à 8, **caractérisé en ce que** la mise en contact de l'ammoniac liquide et de l'échangeur d'ions a lieu à une température dans la plage allant de -10 à 40 °C.

10. Procédé selon au moins l'une quelconque des revendications 1 à 9, **caractérisé en ce que** la mise en contact de l'ammoniac liquide et de l'échangeur d'ions a lieu à une pression dans la plage allant de 1 à 20 bar.

11. Procédé selon au moins l'une quelconque des revendications 1 à 10, **caractérisé en ce que** l'échangeur d'ions est régénéré.

12. Procédé selon au moins l'une quelconque des revendications 1 à 11, **caractérisé en ce que** la teneur en ions halogénures de l'ammoniac liquide utilisé est dans la plage allant de 10 ppm à 200 ppm.

13. Procédé selon au moins l'une quelconque des revendications 1 à 12, **caractérisé en ce que** l'ion halogénure est le chlorure.

14. Procédé de fabrication d'amines, **caractérisé en ce que**, lors d'une première étape, de l'ammoniac liquide est purifié selon l'une quelconque des revendications 1 à 13 et, lors d'une seconde étape, l'ammoniac obtenu lors de la première étape est utilisé dans un procédé de fabrication d'amines.
